# EUROPÄISCHE PATENTSCHRIFT

(11) **EP 4 203 449 B1**
(45) Veröffentlichungstag und Bekanntmachung des Hinweises auf die Patenterteilung: **27.08.2025**
(21) Anmeldenummer: 21217125.0
(22) Anmeldetag: 22.12.2021
(51) Int. Cl.: H04M 3/493, H04M 3/42, H04W 4/16, H04L 61/4535, H04L 61/4588, H04L 101/365

(54) **VERBINDUNGSDIENST FÜR EIN MOBILFUNKNETZ**
COMMUNICATION SERVICE FOR A MOBILE PHONE NETWORK
SERVICE DE CONNEXION POUR UN RÉSEAU MOBILE

(43) Veröffentlichungstag der Anmeldung: 28.06.2023
(73) Patentinhaber: Deutsche Telekom AG, 53113 Bonn (DE)
(72) Erfinder: MINOW, Jascha, 64625 Bensheim (DE); EL MALLOUKI, Said, 56329 St.Goar (DE); JAHN, Carl, 65191 Wiesbaden (DE)
(74) Vertreter: RDL Patentanwälte PartG mbB

(56) Entgegenhaltungen:
- EP-B1- 1 143 691
- EP-B1- 3 313 055
- WO-A1-02/05533
- DE-A1- 10 057 216

## Beschreibung

Die Erfindung betrifft ein Verfahren zum Telefonieren über ein Mobilfunknetz, bei dem ein mit einem Mobilfunknetz verbundenes erstes Endgerät von einem ersten Teilnehmer zum Telefonieren aktiviert wird und ein Verbindungsdienst des Mobilfunknetzes das erste Endgerät mit einem bestimmten zweiten Endgerät eines zweiten Teilnehmers zum Telefonieren verbindet. Ferner betrifft die Erfindung einen Verbindungsdienst für ein Mobilfunknetz und ein Computerprogrammprodukt.

Verfahren der eingangs genannten Art gehören in unterschiedlichen Ausgestaltungen zum Stand der Technik und dienen dazu, zwei Endgeräte mittels eines Mobilfunknetzes zum Telefonieren zu verbinden, d.h. für die beiden Endgeräte eine drahtlose Telefonieverbindung bereitzustellen.

Bei derartigen Verfahren aktiviert gewöhnlich ein erster Teilnehmer ein erstes mit dem Mobilfunknetz verbundenes Endgerät zum Telefonieren. Das aktivierte erste Endgerät überträgt eine Verbindungsanfrage mit einer eindeutigen Telefonnummer eines zweiten Endgeräts zu einem Verbindungsdienst des Mobilfunknetzes. Der Verbindungsdienst bestimmt anhand der empfangenen Telefonnummer das zweite Endgerät und verbindet das erste Endgerät mit dem bestimmten zweiten Endgerät zum Telefonieren.

Der erste Teilnehmer, welcher auch als Anrufer bezeichnet wird, kann die Telefonnummer des zweiten Endgeräts beispielsweise einfach mittels einer Tastatur des ersten Endgeräts oder mittels einer in dem ersten Endgerät gespeicherten Kontaktdatenbank bestimmen.

Wenn die Telefonnummer des zweiten Endgeräts dem ersten Teilnehmer nicht bekannt und auch nicht in dem ersten Endgerät, beispielsweise in der Kontaktdatenbank, gespeichert ist, kann der erste Teilnehmer in günstigen Fällen die Telefonnummer mittels eines Auskunftsdiensts des Mobilfunknetzes anhand einer Kombination aus einer Bezeichnung eines dem zweiten Endgerät zugeordneten zweiten Teilnehmers, welcher auch als Angerufener bezeichnet wird, und eine Adresse des zweiten Teilnehmers ermitteln.

Die Bezeichnung des zweiten Teilnehmers umfasst einen Namen des zweiten Teilnehmers und kann zusätzlich eine Angabe betreffend eine Funktion des zweiten Teilnehmers umfassen. Die Adresse des zweiten Teilnehmers ist eine Angabe betreffend eine dem zweiten Teilnehmer zugeordnete räumliche Position.

Ein günstiger Fall liegt vor, wenn eine zentrale Telefonnummerndatenbank des Mobilfunknetzes genau einen Eintrag mit der Bezeichnung des zweiten Teilnehmers und der Adresse des zweiten Teilnehmers sowie der Telefonnummer umfasst. Der Auskunftsdienst kann in diesem Fall den Verbindungsdienst veranlassen, automatisch das zweite Endgerät anhand der ermittelten Telefonnummer zu bestimmen und das erste Endgerät mit dem bestimmten zweiten Endgerät zum Telefonieren zu verbinden.

Allerdings hat der erste Teilnehmer ohne eine Kenntnis der Adresse des zweiten Teilnehmers oder in einem ungünstigen Fall, wenn die zentrale Telefonnummerndatenbank keinen passenden Eintrag oder mehrere passende Einträge umfasst, keine komfortable und zuverlässige Möglichkeit, das erste Endgerät mit dem zweiten Endgerät zum Telefonieren zu verbinden.

WO 02/05533 A1 offenbart ein Verfahren zum Telefonieren über ein Mobilfunknetz, bei dem ein erstes Endgerät eine Verbindungsanfrage mit einem Namen einer Person oder eines Unternehmens zu einem Verbindungsdienst eines Mobilfunknetzes überträgt und der Verbindungsdienst ein zweites Endgerät anhand des übertragenen Namens mittels einer Datenbank bestimmt.

DE 100 57 216 A1 beschreibt dagegen ein Telefonierverfahren, bei dem ein erstes Endgerät ein zweites Endgerät mittels einer automatischen Datenbankabfrage bestimmt, die bestimmte Daten umfasst.

EP 3 313 055 B1 offenbart ein Telefonierverfahren, bei dem ein erstes Endgerät einen von einem ersten Teilnehmer gesprochenen Namen eines zweiten Teilnehmers sensorisch erfasst und erkennt und ein dem zweiten Teilnehmer zugeordnetes zweites Endgerät anhand einer beispielsweise für einen Kontakteintrag des ersten Endgeräts berechneten Wahrscheinlichkeit bestimmt.

EP 1 143 691 B1 beschreibt ein Verfahren, bei dem ein Endgerät anhand eines von einem Nutzer zumindest teilweise eingegebenen Namens und einer geographischen Position des Endgeräts einen Internet-Dienst zur Nutzung bestimmt.

Der Erfindung liegt daher die Aufgabe zugrunde, ein Verfahren zum Telefonieren über ein Mobilfunknetz vorzuschlagen, welches ein Verbinden mit einem Endgerät eines Angerufenen allein anhand einer Bezeichnung des Angerufenen komfortabel und zuverlässig ermöglicht. Weitere Aufgaben der Erfindung sind, einen Verbindungsdienst für ein Mobilfunknetz und ein Computerprogrammprodukt für einen Verbindungsdienst eines Mobilfunknetzes bereitzustellen.

Ein Gegenstand der Erfindung ist ein Verfahren zum Telefonieren über ein Mobilfunknetz, bei dem ein mit einem Mobilfunknetz verbundenes erstes Endgerät von einem ersten Teilnehmer zum Telefonieren aktiviert wird und ein Verbindungsdienst des Mobilfunknetzes das erste Endgerät mit einem bestimmten zweiten Endgerät eines zweiten Teilnehmers zum Telefonieren verbindet. Der Verbindungsdienst verwendet zum Verbinden eine eindeutige Telefonnummer des zweiten Endgeräts.

Erfindungsgemäß überträgt das aktivierte erste Endgerät eine Verbindungsanfrage mit einer von jeder Adresse eines zweiten Teilnehmers verschiedenen Bezeichnung des zweiten Teilnehmers zu dem Verbindungsdienst und bestimmt der Verbindungsdienst das zweite Endgerät anhand der empfangenen Bezeichnung automatisch. Mit anderen Worten umfasst die Verbindungsanfrage allein einen Namen des zweiten Teilnehmers und optional eine Funktion des zweiten Teilnehmers, jedoch keine Adresse des zweiten Teilnehmers. Der Verbindungsdienst ermittelt eine Telefonnummer des zweiten Endgeräts ausschließlich anhand der empfangenen Bezeichnung des zweiten Teilnehmers. Der erste Teilnehmer braucht für die Verbindungsanfrage lediglich die Bezeichnung des zweiten Teilnehmers zu kennen, was mit einem großen Komfort für den ersten Teilnehmer einhergeht.

Bevorzugt fordert der Verbindungsdienst den ersten Teilnehmer nach dem Aktivieren des ersten Endgeräts zum Aussprechen der Bezeichnung auf, spricht der erste Teilnehmer die Bezeichnung aus, erfasst das erste Endgerät die Bezeichnung auditiv und stellt das erste Endgerät die erfasste Bezeichnung für die Verbindungsanfrage bereit. Der Verbindungsdienst fordert den ersten Teilnehmer mittels des ersten Endgeräts auditiv wahrnehmbar zum Eingeben der Bezeichnung des zweiten Teilnehmers auf und erlaubt dem ersten Teilnehmer ein stimmliches und natürlichsprachliches Eingeben der Bezeichnung, was den Komfort für den ersten Teilnehmer weiter vergrößert. Die Verbindungsanfrage umfasst eine zu erfassten Bezeichnung korrespondierende Audiodatei. Der Verbindungsdienst empfängt die Audiodatei und ermittelt die Bezeichnung des zweiten Teilnehmers durch Analysieren der Audiodatei mittels eines Spracherkennungsalgorithmus.

Der Verbindungsdienst bestimmt anhand der ermittelten Bezeichnung eine den zweiten Teilnehmer umfassende Mehrzahl von mit der ermittelten Bezeichnung kompatiblen Teilnehmern. Jedem bestimmten kompatiblen Teilnehmer sind eine Adresse und eine Telefonnummer zugeordnet. Der Verbindungsdienst kann den zweiten Teilnehmer in der bestimmten Mehrzahl anhand der zugeordneten Adressen bestimmen.

In einer Ausführungsform bestimmt der Verbindungsdienst das zweite Endgerät mittels eines von dem ersten Endgerät erfassten Bewegungsprofils des ersten Teilnehmers. Das erste Endgerät überträgt das Bewegungsprofil zu dem Verbindungsdienst. Der Verbindungsdienst empfängt das Bewegungsprofil und vergleicht das empfangene Bewegungsprofil mit den den kompatiblen Teilnehmern zugeordneten Adressen und bestimmt einen kompatiblen Teilnehmer als den zweiten Teilnehmer, wenn sich das Bewegungsprofil des ersten Teilnehmers mit dem Bewegungsprofil des kompatiblen Teilnehmers räumlich und zeitlich überschneidet, insbesondere die Adresse des kompatiblen Teilnehmers umfasst. Das Bewegungsprofil kann auf ein vorbestimmtes Zeitintervall, beispielsweise ein Zeitintervall von sieben Tagen, eingeschränkt sein.

Alternativ oder zusätzlich bestimmt der Verbindungsdienst das zweite Endgerät mittels einer Anrufhistorie des ersten Teilnehmers. Das erste Endgerät überträgt die Anrufhistorie zu dem Verbindungsdienst. Der Verbindungsdienst empfängt die Anrufhistorie und vergleicht die empfangene Anrufhistorie mit den den kompatiblen Teilnehmern zugeordneten Telefonnummern und bestimmt einen kompatiblen Teilnehmer als den zweiten Teilnehmer, wenn die empfangene Anrufhistorie die Telefonnummer des kompatiblen Teilnehmers umfasst. Die Anrufhistorie kann auf ein vorbestimmtes Zeitintervall, beispielsweise ein Zeitintervall von sieben Tagen, eingeschränkt sein.

Alternativ oder zusätzlich bestimmt der Verbindungsdienst das zweite Endgerät mittels einer räumlichen Umgebung des ersten Teilnehmers. Das erste Endgerät überträgt eine die räumliche Position des ersten Endgeräts betreffende Angabe zu dem Verbindungsdienst. Der Verbindungsdienst empfängt die Positionsangabe, ermittelt anhand der Positionsangabe eine räumliche Umgebung des ersten Endgeräts, beispielsweise als einen Postleitzahlbereich, vergleicht die ermittelte Umgebung mit den den kompatiblen Teilnehmern zugeordneten Adressen und bestimmt einen kompatiblen Teilnehmer als den zweiten Teilnehmer, wenn die ermittelte Umgebung die Adresse des kompatiblen Teilnehmers umfasst.

Alternativ oder zusätzlich bestimmt der Verbindungsdienst das zweite Endgerät mittels von dem ersten Endgerät oder von einem Backendserver des Mobilfunknetzes gespeicherter Daten. Das erste Endgerät überträgt die Daten, beispielsweise einen Browserverlauf oder einen Kalenderinhalt, zu dem Verbindungsdienst. Der Verbindungsdienst empfängt die Daten und vergleicht die empfangenen Daten mit den kompatiblen Teilnehmern zugeordneten Daten und bestimmt einen kompatiblen Teilnehmer als den zweiten Teilnehmer, wenn die zugeordneten Daten mit den übertragenen Daten kompatibel sind.

Der Backenserver kann Bewegungsprofile und/oder Anrufhistorien kompatibler Teilnehmer bereitstellen. Der Verbindungsdienst vergleicht das von dem ersten Endgerät empfangene Bewegungsprofil und/oder die von dem ersten Endgerät empfangene Anrufhistorie mit den bereitgestellten Bewegungsprofilen und/oder Anrufhistorien und bestimmt einen kompatiblen Teilnehmer als den zweiten Teilnehmer, wenn das bereitgestellte Bewegungsprofil und/oder die Anrufhistorie mit dem von dem ersten Endgerät empfangenen Bewegungsprofil und/oder der von dem ersten Endgerät empfangenen Anrufhistorie kompatibel ist.

Alternativ oder zusätzlich bestimmt der Verbindungsdienst das zweite Endgerät mittels über das Mobilfunknetz zugänglicher das zweite Endgerät betreffender Daten. Die das zweite Endgerät betreffenden Daten können von einer Website bereitgestellt werden. Der Verbindungsdienst kann die Daten von der Website abrufen und das zweite Endgerät abhängig von den abgerufenen Daten bestimmen. Beispielsweise kann die Website eine Öffnungszeit des bestimmten zweiten Teilnehmers und sowohl eine Telefonnummer eines Festnetzanschlusses des bestimmten zweiten Teilnehmers als auch eine Telefonnummer eines mobilen Anschlusses des bestimmten zweiten Teilnehmers angeben. Der Verbindungsdienst kann das erste Endgerät innerhalb der Öffnungszeit mit dem Festnetzanschluss als dem zweiten Endgerät und außerhalb der Öffnungszeit mit dem mobilen Anschluss als dem zweiten Endgerät verbinden.

Erfindungsgemäß berechnet der Verbindungsdienst eine Wahrscheinlichkeit für das zweite Endgerät und bestimmt der Verbindungsdienst das zweite Endgerät, wenn die berechnete Wahrscheinlichkeit gleich oder größer einer vorbestimmten Mindestwahrscheinlichkeit ist. Jede der vorstehenden Bestimmungen des zweiten Endgeräts kann eine Unsicherheit aufweisen. Der Vermittlungsdienst ordnet jeder der Bestimmungen eine zu der Unsicherheit korrespondierende Wahrscheinlichkeit zu und berechnet aus den jeweils zugeordneten Wahrscheinlichkeiten die Wahrscheinlichkeit für das zweite Endgerät. Je größer die vorbestimmte Mindestwahrscheinlichkeit ist, desto zuverlässiger wird das zweite Endgerät bestimmt.

Ein weiterer Aspekt ist ein Verbindungsdienst für ein Mobilfunknetz, welcher konfiguriert ist, ein erstes Endgerät mit einem zweiten Endgerät zum Telefonieren zu verbinden. Der Verbindungsdienst kann das erste Endgerät mit dem zweiten Endgerät anhand einer Telefonnummer des zweiten Endgeräts verbinden.

Erfindungsgemäß ist der Verbindungsdienst konfiguriert, an einem erfindungsgemäßen Verfahren mitzuwirken. Der Verbindungsdienst kann das erste Endgerät mit dem zweiten Endgerät allein anhand einer Bezeichnung eines dem zweiten Endgerät zugeordneten zweiten Teilnehmers, welche von jeder Adresse des zweiten Teilnehmers verschieden ist, d.h. ohne dass ein dem ersten Endgerät zugeordneter Teilnehmer eine Adresse des zweiten Teilnehmers gibt. Auf diese Weise vergrößert der Verbindungsdienst einen Komfort und eine Zuverlässigkeit des Telefonierens.

Noch ein Aspekt der Erfindung ist ein Computerprogrammprodukt für einen Verbindungsdienst eines Mobilfunknetzes, mit einem Speichermedium und einem in dem Speichermedium gespeicherten und den Verbindungsdienst implementierenden Programm, welches einen Rechner veranlasst, einen Verbindungsdienst bereitzustellen. Der Rechner kann das Programm unmittelbar aus dem Speichermedium und oder nach einem Installieren des Programms in einem Arbeitsspeicher des Rechners aus dem Arbeitsspeicher lesen. Entsprechend kann das Speichermedium als ein externer Datenträger wie ein CD-ROM oder ein USB-Stick oder als ein interner Datenspeicher wie eine Festplatte des Rechners oder ein Arbeitsspeicher des Rechners oder als ein Cloudspeicher ausgebildet sein.

Erfindungsgemäß wird der Verbindungsdienst für ein erfindungsgemäßes Verfahren bereitgestellt, wenn das Programm von einem Prozessor des Rechners ausgeführt wird. Das Computerprogrammprodukt dient einem Vergrößern eines Komforts und einer Zuverlässigkeit eines Telefonierens über ein Mobilfunknetz.

Ein wesentlicher Vorteil des erfindungsgemäßen Verfahrens besteht darin, dass ein Telefonieren über eine Mobilfunknetzwerk selbst dann sehr komfortabel und zuverlässig möglich ist, wenn ein Anrufer lediglich eine Bezeichnung eines Angerufenen kennt und angibt.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

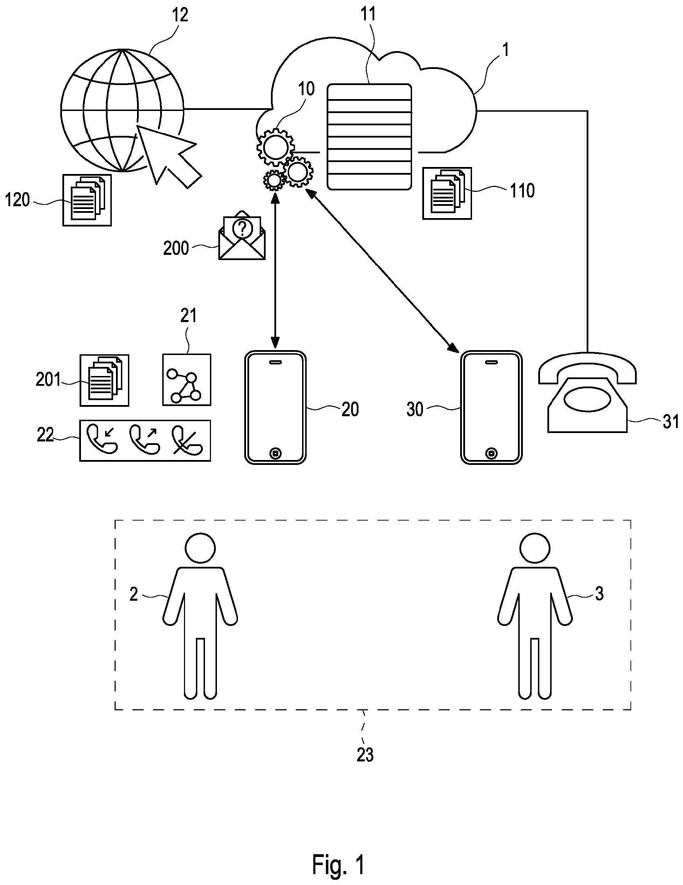

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einem Blockdiagramm ein Mobilfunknetz mit einem Verbindungsdienst nach einer Ausführungsform der Erfindung.

Fig. 1 zeigt in einem Blockdiagramm ein Mobilfunknetz 1 mit einem Verbindungsdienst 10 nach einer Ausführungsform der Erfindung für das Mobilfunknetz 1. Der Verbindungsdienst 1 ist konfiguriert, an einem nachfolgend beschriebenen Verfahren zum Telefonieren über das Mobilfunknetz 1 mitzuwirken.

Der Verbindungsdienst 10 kann mittels eines Computerprogrammprodukts für einen Verbindungsdienst 10 implementiert sein. Das Computerprogrammprodukt umfasst ein Speichermedium und ein in dem Speichermedium gespeichertes und den Verbindungsdienst 10 implementierendes Programm. Das Programm veranlasst einen Rechner, den Verbindungsdienst 10 für das folgende Verfahren bereitzustellen, wenn das Programm von einem Prozessor des Rechners ausgeführt wird.

Bei dem Verfahren wird ein mit einem Mobilfunknetz 1 verbundenes erstes Endgerät 20 von einem ersten Teilnehmer 2 zum Telefonieren aktiviert. Das erste Endgerät 20 ist beispielhaft als ein mobiles Endgerät ausgebildet.

Nach dem Aktivieren des ersten Endgeräts 20 kann der Verbindungsdienst 10 den ersten Teilnehmer 2 zum Aussprechen einer Bezeichnung eines zweiten Teilnehmers 3 auffordern. Der erste Teilnehmer 2 kann daraufhin eine von jeder Adresse des zweiten Teilnehmers 3 verschiedene Bezeichnung aussprechen. Das erste Endgerät 20 kann sodann die ausgesprochene Bezeichnung auditiv erfassen und die erfasste Bezeichnung für eine Verbindungsanfrage 200 bereitstellen.

Das aktivierte erste Endgerät 20 überträgt die Verbindungsanfrage 200 mit der bereitgestellten von jeder Adresse eines zweiten Teilnehmers 3 verschiedenen Bezeichnung des zweiten Teilnehmers 3 zu dem Verbindungsdienst 10 des Mobilfunknetzes 1.

Der Verbindungsdienst 10 bestimmt ein zweites Endgerät 30, 31 des zweiten Teilnehmers 3 anhand der empfangenen Bezeichnung automatisch. Das zweite Endgerät 30 ist beispielhaft als ein mobiles Endgerät ausgebildet. Das zweite Endgerät 31 ist beispielhaft als ein stationäres Endgerät ausgebildet.

Insbesondere bestimmt der Verbindungsdienst 10 das zweite Endgerät 30, 31 mittels eines von dem ersten Endgerät 20 erfassten Bewegungsprofils 21 des ersten Teilnehmers 2.

Der Verbindungsdienst 10 kann das zweite Endgerät 30, 31 mittels einer Anrufhistorie 20 des ersten Teilnehmers 2 bestimmen.

Auch kann der Verbindungsdienst 10 das zweite Endgerät 30, 31 mittels einer räumlichen Umgebung 23 des ersten Teilnehmers 2 bestimmen.

Weiterhin kann der Verbindungsdienst 10 das zweite Endgerät 30, 31 mittels von dem ersten Endgerät 20 oder von einem Backendserver 11 des Mobilfunknetzes 1 gespeicherter Daten 110, 201 bestimmen.

Der Verbindungsdienst 10 kann das zweite Endgerät 30, 31 ferner mittels über das Mobilfunknetz 1 zugänglicher das zweite Endgerät 30, 31 betreffender Daten 120 bestimmen. Die Daten 120 können von einer Website 12 bereitgestellt sein.

Idealerweise kombiniert der Verbindungsdienst bei Bedarf und/oder sicherheitshalber zwei oder mehr der vorstehenden Bestimmungsweisen.

Der Verbindungsdienst 10 berechnet eine Wahrscheinlichkeit für das zweite Endgerät 30, 31 und bestimmt das zweite Endgerät 30, 31, wenn die berechnete Wahrscheinlichkeit gleich oder größer einer vorbestimmten Mindestwahrscheinlichkeit ist.

Der Verbindungsdienst 10 verbindet das erste Endgerät 20 mit dem bestimmten zweiten Endgerät 30, 31 zum Telefonieren.

### Bezugszeichenliste

- 1: Mobilfunknetz
- 10: Verbindungsdienst
- 11: Backendserver
- 110: Daten
- 12: Website
- 120: Daten
- 2: erster Teilnehmer
- 20: erstes Endgerät
- 200: Verbindungsanfrage
- 201: Daten
- 21: Bewegungsprofil
- 22: Anrufhistorie
- 23: räumliche Umgebung
- 3: zweiter Teilnehmer
- 30: zweites Endgerät
- 31: zweites Endgerät

## Patentansprüche

1. Verfahren zum Telefonieren über ein Mobilfunknetz (1), bei dem
- ein mit einem Mobilfunknetz (1) verbundenes erstes Endgerät (20) von einem ersten Teilnehmer (2) zum Telefonieren aktiviert wird;
- das aktivierte erste Endgerät (20) eine Verbindungsanfrage (200) mit einer von jeder Adresse eines zweiten Teilnehmers (3) verschiedenen Bezeichnung des zweiten Teilnehmers (3) zu einem Verbindungsdienst (10) des Mobilfunknetzes (1) überträgt;
- der Verbindungsdienst (10) das erste Endgerät (20) mit einem bestimmten zweiten Endgerät (30, 31) des zweiten Teilnehmers (3) zum Telefonieren verbindet;
- der Verbindungsdienst (10) das zweite Endgerät (30, 31) anhand der empfangenen Bezeichnung automatisch bestimmt, wobei der Verbindungsdienst (10) eine Wahrscheinlichkeit für das zweite Endgerät (30, 31) berechnet und das zweite Endgerät (30, 31) bestimmt, wenn die berechnete Wahrscheinlichkeit gleich oder größer einer vorbestimmten Mindestwahrscheinlichkeit ist.

2. Verfahren nach Anspruch 1, bei dem der Verbindungsdienst (10) den ersten Teilnehmer (2) nach dem Aktivieren des ersten Endgeräts (20) zum Aussprechen der Bezeichnung auffordert, der erste Teilnehmer (2) die Bezeichnung ausspricht, das erste Endgerät (20) die ausgesprochene Bezeichnung auditiv erfasst und die erfasste Bezeichnung für die Verbindungsanfrage (200) bereitstellt.

3. Verfahren nach Anspruch 1 oder 2, bei dem der Verbindungsdienst (10) das zweite Endgerät (30, 31) mittels eines von dem ersten Endgerät (20) erfassten Bewegungsprofils (21) des ersten Teilnehmers (2) bestimmt.

4. Verfahren nach einem der Ansprüche 1 bis 3, bei dem der Verbindungsdienst (10) das zweite Endgerät (30, 31) mittels einer Anrufhistorie (20) des ersten Teilnehmers (2) bestimmt.

5. Verfahren nach einem der Ansprüche 1 bis 4, bei dem der Verbindungsdienst (10) das zweite Endgerät (30, 31) mittels einer räumlichen Umgebung (23) des ersten Teilnehmers (2) bestimmt.

6. Verfahren nach einem der Ansprüche 1 bis 5, bei dem der Verbindungsdienst (10) das zweite Endgerät (30, 31) mittels von dem ersten Endgerät (20) oder von einem Backendserver (11) des Mobilfunknetzes (1) gespeicherter Daten (110, 201) bestimmt.

7. Verfahren nach einem der Ansprüche 1 bis 6, bei dem der Verbindungsdienst (10) das zweite Endgerät (30, 31) mittels über das Mobilfunknetz (1) zugänglicher das zweite Endgerät (30, 31) betreffender Daten (120) bestimmt.

8. Verbindungsdienst (10) für ein Mobilfunknetz (1), welcher konfiguriert ist, an einem Verfahren nach einem der Ansprüche 1 bis 7 mitzuwirken.

9. Computerprogrammprodukt für einen Verbindungsdienst (10) eines Mobilfunknetzes (1), mit einem Speichermedium und einem in dem Speichermedium gespeicherten und den Verbindungsdienst (10) implementierenden Programm, welches einen Rechner veranlasst, für ein Verfahren nach einem der Ansprüche 1 bis 7 einen Verbindungsdienst (10) bereitzustellen, wenn das Programm von einem Prozessor des Rechners ausgeführt wird.

## Claims

1. A method for making telephone calls via a mobile radio network (1), in which
- a first terminal (20) connected to a mobile radio network (1) is activated for telephoning by a first subscriber (2);
- the activated first terminal (20) transmits a connection request (200) with a designation of the second subscriber (3) different from each address of a second subscriber (3) to a connection service (10) of the mobile radio network (1);
- the connection service (10) connects the first terminal (20) to a determined second terminal (30, 31) of the second subscriber (3) for telephoning;
- the connection service (10) automatically determines the second terminal (30, 31) based on the received designation, wherein the connection service (10) calculates a probability for the second terminal (30, 31) and determines the second terminal (30, 31) if the calculated probability is equal to or greater than a predetermined minimum probability.

2. The method according to claim 1, in which the connection service (10) requests the first subscriber (2) to pronounce the designation after activating the first terminal (20), the first subscriber (2) pronounces the designation, the first terminal (20) aurally captures the pronounced designation and provides the captured designation for the connection request (200).

3. The method according to claim 1 or 2, in which the connection service (10) determines the second terminal (30, 31) by means of a movement profile (21) of the first subscriber (2) captured by the first terminal (20).

4. The method according to any of claims 1 to 3, in which the connection service (10) determines the second terminal (30, 31) by means of a call history (20) of the first subscriber (2).

5. The method according to any of claims 1 to 4, in which the connection service (10) determines the second terminal (30, 31) by means of a spatial environment (23) of the first subscriber (2).

6. The method according to any of claims 1 to 5, in which the connection service (10) determines the second terminal (30, 31) by means of data (110, 201) stored by the first terminal (20) or by a backend server (11) of the mobile radio network (1).

7. The method according to any of claims 1 to 6, in which the connection service (10) determines the second terminal (30, 31) by means of data (120) relating to the second terminal (30, 31), which data is accessible via the mobile radio network (1).

8. A connection service (10) for a mobile radio network (1) configured to participate in a method according to any of claims 1 to 7.

9. A computer program product for a connection service (10) of a mobile radio network (1), with a storage medium and a program stored in the storage medium and implementing the connection service (10), which causes a computer to provide a connection service (10) for a method according to any of claims 1 to 7 when the program is executed by a processor of the computer.

## Revendications

1. Procédé pour téléphoner via un réseau de téléphonie mobile (1), dans lequel
- un premier terminal (20) relié à un réseau de téléphonie mobile (1) est activé par un premier abonné (2) pour téléphoner ;
- le premier terminal (20) activé transmet une demande de connexion (200) avec une désignation d'un deuxième abonné (3) différente de chaque adresse du deuxième abonné (3) vers un service de connexion (10) du réseau de téléphonie mobile (1) ;
- le service de connexion (10) relie le premier terminal (20) à un deuxième terminal (30, 31) déterminé du deuxième abonné (3) pour téléphoner ;
- le service de connexion (10) détermine automatiquement le deuxième terminal (30, 31) à l'aide de la désignation reçue, le service de connexion (10) calculant une probabilité pour le deuxième terminal (30, 31) et déterminant le deuxième terminal (30, 31) lorsque la probabilité calculée est égale ou supérieure à une probabilité minimale prédéterminée.

2. Procédé selon la revendication 1, dans lequel le service de connexion (10) demande au premier abonné (2) de prononcer la désignation après l'activation du premier terminal (20), le premier abonné (2) prononce la désignation, le premier terminal (20) détecte auditivement la désignation prononcée et fournit la désignation détectée pour la demande de connexion (200).

3. Procédé selon la revendication 1 ou 2, dans lequel le service de connexion (10) détermine le deuxième terminal (30, 31) au moyen d'un profil de déplacement (21) du premier abonné (2) détecté par le premier terminal (20).

4. Procédé selon l'une des revendications 1 à 3, dans lequel le service de connexion (10) détermine le deuxième terminal (30, 31) au moyen d'un historique d'appel (20) du premier abonné (2).

5. Procédé selon l'une des revendications 1 à 4, dans lequel le service de connexion (10) détermine le deuxième terminal (30, 31) au moyen d'un environnement spatial (23) du premier abonné (2).

6. Procédé selon l'une des revendications 1 à 5, dans lequel le service de connexion (10) détermine le deuxième terminal (30, 31) au moyen de données (110, 201) enregistrées par le premier terminal (20) ou par un serveur dorsal (11) du réseau de téléphonie mobile (1).

7. Procédé selon l'une des revendications 1 à 6, dans lequel le service de connexion (10) détermine le deuxième terminal (30, 31) au moyen de données (120) concernant le deuxième terminal (30, 31) accessibles via le réseau de téléphonie mobile (1).

8. Service de connexion (10) pour un réseau de téléphonie mobile (1), configuré pour participer à un procédé selon l'une des revendications 1 à 7.

9. Produit de programme informatique pour un service de connexion (10) d'un réseau de téléphonie mobile (1), doté d'un support de stockage et d'un programme enregistré sur le support de stockage et mettant en oeuvre le service de connexion (10), qui amène un ordinateur à fournir un service de connexion (10) pour un procédé selon l'une des revendications 1 à 7, lorsque le programme est exécuté par un processeur de l'ordinateur.
